# EUROPÄISCHE PATENTSCHRIFT

(11) **EP 1 540 210 B1**
(45) Veröffentlichungstag und Bekanntmachung des Hinweises auf die Patenterteilung: **24.05.2006**
(21) Anmeldenummer: 03769277.9
(22) Anmeldetag: 15.09.2003
(51) Int. Cl.: F16J 15/34, F16J 15/00

(54) **DOPPELTWIRKENDE DICHTUNGSANORDNUNG**
DUAL-ACTION SEALING SYSTEM
ENSEMBLE D'ETANCHEITE A DOUBLE ACTION

(30) Priorität: 19.09.2002 DE 20214529 U
(43) Veröffentlichungstag der Anmeldung: 15.06.2005
(73) Patentinhaber: Burgmann Dichtungswerke GmbH & Co. KG, 82515 Wolfratshausen (DE)
(72) Erfinder: GEIGER, Peter, 82541 Münsing (DE); HILDENBRAND, Horst, 82110 Germering (DE); LANGERMANTEL, Andreas, 82515 Wolfratshausen (DE); SCHRÜFER, Andreas, 82515 Wolfratshausen (DE); UCH, Carsten, 82380 Peissenberg (DE)
(74) Vertreter: Schmidt, Horst
(86) Internationale Anmeldenummer: PCT/EP2003/010231
(87) Internationale Veröffentlichungsnummer: WO 2004/029489

(56) Entgegenhaltungen:
- EP-A- 1 054 196
- EP-A- 1 148 277
- GB-A- 2 285 101
- US-A- 3 640 541
- US-B1- 6 210 107

## Beschreibung

Die Erfindung betrifft eine doppeltwirkende Dichtungsanordnung mit einem Paar Primärdichtungen gemäss dem Oberbegriff der Patentanspruches 1, wie sie aus der US 6 210 107 B1 bekannt ist. Sie betrifft insbesondere eine Sperrgas-gepufferte Dichtungsanordnung zum Einsatz bei feststoffbeladenen flüssigen Medien, bei der wenigstens eine der Primärdichtungen als gasgeschmierte Gleitringdichtung ausgebildet ist.

Bei doppeltwirkenden Dichtungsanordnungen (vgl. auch BURGMANN, Gasgeschmierte Gleitringdichtungen, Selbstverlag 1997, Seite 10) wird zwischen den zusammenwirkenden Gleitringen der Gleitring-Primärdichtung bei Betrieb ein Dichtspalt gebildet, wobei die Dichtspaltbildung durch förderwirksame Strukturen oder Ausnehmungen in einer oder beiden Dichtflächen der Gleitringe, die das Sperrgas zwischen die Dichtflächen pumpen können, gefördert werden kann. Das Sperrgas steht unter einem höheren Druck als der Druck des abzudichtenden Mediums, so dass eine Leckage aus dem Dichtspalt stets aus Sperrgas besteht. Einer der zusammenwirkenden Gleitringe ist axial beweglich und mit einer Vorspannkraft beaufschlagt. Da diese der Dichtspaltbildung grundsätzlich entgegenwirkt, ist sie so zu bemessen, dass die Kräfte bei Betrieb nicht überschritten werden, die die Bildung des Dichtspaltes bewirken. Die Abdichtung des mit der Vorspannkraft beaufschlagten, axial beweglichen Gleitringes gegenüber dem benachbarten Bauteil, z.B. dem Gehäuse einer Gerätschaft, erfolgt andererseits über ein Sekundärdichtungselement, z.B. einen O-Ring, der die Bewegung des betreffenden Gleitringes ermöglichen muss, ohne diese zu behindern. Für die Funktion der Gleitringdichtung ist es deshalb wichtig, dass eine uneingeschränkte leichte Beweglichkeit des Gleitringes gewährleistet ist und diese nicht durch das abzudichtende Medium, wenn dieses einen Zutritt zum Sekundärdichtungselement hat, im Laufe der Betriebszeit beeinträchtigt wird. Insbesondere können sich Ablagerungen von Feststoffen, die in dem abzudichtenden Medium enthalten sind, an den Flächen bilden, mit denen das Sekundärdichtungselement in dichtendem Eingriff steht. Solche Ablagerungen können die Beweglichkeit des Gleitringes deutlich beeinträchtigen oder ggf. sogar gänzlich verhindern. Verschiedene Massnahmen wurden schon vorgeschlagen, um das abzudichtende Medium aus dem Bereich der funktionswichtigen Teile einer Gleitringdichtung fernzuhalten. Eine derartige Massnahme ist die permanente Spülung der Gleitringdichtung mittels eines sauberen Fremdmediums, wie es z.B. in BURGMANN, ABC der Gleitringdichtung, 1988, Selbstverlag, Seite 228 beschrieben ist. Gemeinsam ist den bekannten Massnahmen, dass damit ein relativ grosser baulicher Aufwand verbunden ist, der die Dichtungsanordnungen entsprechend verteuert und daher nur bei Anwendungsfällen gerechtfertigt ist, bei denen die Verteuerung von untergeordneter Bedeutung ist. Ausserdem sind die bekannten Massnahmen mit einem erhöhten Wartungsaufwand verbunden. Eine andere aus der US 6 210 107 B1 bekannte Massnahme sieht die Bildung eines Spaltraumes am äuseren Umfang der Gleiringdichtung und des Sekundärelementes mittels einer stationär gehaltenen Abschirmhülse vor. In den Spaltraum kann die Leckage aus dem Sperrgas einströmen. Um ein ungehindertes Entweichen der Leckage aus dem Spaltraum zu verhindern, wird in der Druckschrift vorgeschlagen, den Spaltraum mittels einer Dichtung, z.B. in Gestalt einer Lippendichtung, gegenüber dem abzudichtenden Medium endseitig abzudichten. Dadurch entstehen im Spaltraum pulsierende Druckzustände, die die Stabilität der Druckverhältnisse im Dichtspalt zwischen den Gleitringen beeinträchtigen können. Ferner können diese Dichtungen infolge ihres Zusammenwirkens mit Bereichen des rotierenden Gleitringes die Beweglichkeit des federvorgespannten Gleitringes behindern.

Der Erfindung liegt die Aufgabe zugrunde, eine Dichtungsanordnung der eingangs erwähnten Gattung zu schaffen, bei der die Beweglichkeit des betreffenden Gleitringes, mit dem das Sekundärdichtungselement zusammenwirkt, bei einer Vielzahl von abzudichtenden Medien einschliesslich solcher, die mit Feststoffen beladen sind, gewährleistet ist und dennoch die Dichtungsanordnung einen unkomplizierten, wartungsgünstigen Aufbau aufweisen soll.

Diese Aufgabe wird durch die Merkmale des Patentanspruches 1 gelöst, die bewirken, dass eine Leckage des Sperrdruckgases an einem freien Entweichen in das abzudichtende Medium gehindert ist, so dass die Leckage ein Gaspolster bilden kann, welches die Bereiche, die für die Beweglichkeit des Gleitringes der Gleitringdichtung massgebend sind, gegenüber dem abzudichtenden Medium abzuschirmen vermag. Zu diesem Zweck ist ein axialer Bereich der Gleitringdichtung, der den Dichtspalt, der durch die zusammenwirkenden Gleitringe gebildet ist, und das Sekundärdichtungselement umfasst, von einem hülsenförmigen Abschirmelement mit radialem Abstand aussenumfänglich umgeben. Es wird dadurch ein Spaltraum gebildet, in den die Leckage aus dem Dichtspalt einströmen kann. Eine stabile Gaspolsterbildung im Spaltraum kommt dadurch zustande. Die Wirkung kann ferner daduch verstärkt werden, dass die Spaltweite des Spaltraumes in geeigneter Weise minimiert ist, um ein Einströmen des abzudichtenden Mediums in den Spaltraum und damit an Stellen, die für die axiale Beweglichkeit bedeutsam sind, zu verhindern. Dazu ist wenigstens nahe dem zum abzudichtenden Medium offenen Ende des Spaltraumes ein axialer Drosselabschnitt mit verringerter Spaltweite vorgesehen. Mit diesen Mitteln wird bei relativ geringem baulichen Aufwand die für die Funktion der Dichtungsanordnung wichtige Beweglichkeit des Gleitringes bzw. Sekundärdichtungselementes aufrechterhalten, da das Sekundärdichtungselement bei Betrieb praktisch nicht in Berührung mit dem abzudichtenden Medium kommt und sich daher keine die Beweglichkeit beeinträchtigende Ablagerungen von fester Materie im abzudichtenden Medium an den kritischen Bereichen der Gleitringdichtung einstellen können. Ein weiterer Vorteil aus dieser Massnahme ist, dass sich die erfindungsgemässe Dichtungsanordnung durch einen verringerten Wartungsaufwand auszeichnet. Ferner sind vorzugsweise zur Verbesserung der Dichtspaltbildung beim Betrieb der Dichtungsanordnung förderwirksame Strukturen oder Ausnehmungen in wenigstens einer der Dichtflächen der zusammenwirkenden Gleitringe vorgesehen, die bewirken, dass das Sperrdruckgas zwischen die Dichtflächen und in Richtung auf den Spaltraum gepumpt wird.

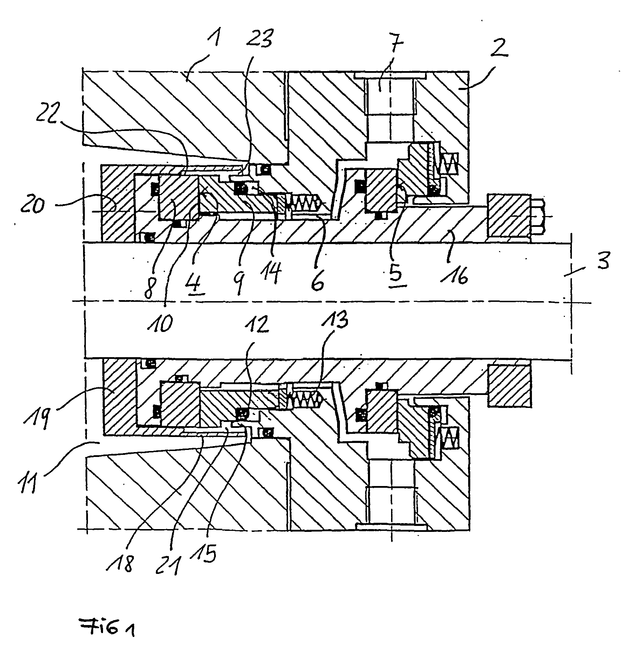

Die Erfindung wird nachfolgend anhand der Zeichnung und einer Ausführungsform näher erläutert, die in längsgeschnittener Ansicht eine vom abzudichtenden Medium aussen beaufschlagte doppeltwirkende Dichtungsanordnung gemäss der Erfindung zeigt.

Obschon ein Hauptanwendungsgebiet der Erfindung die Abdichtung von mit Feststoffen beladenen Flüssigkeiten ist, ist die Erfindung auf dieses Anwendungsgebiet nicht beschränkt, sondern sie kann vorteilhaft immer dann angewandt werden, wenn es gilt die Beweglichkeit eines beweglichen Gleitringes gegenüber einem Sekundärdichtungselement während des Betriebes aufrechtzuerhalten, obschon das abzudichtende Medium (Produkt) Eigenschaften haben kann, die die Beweglichkeit beeinträchtigen können.

In der Zeichnung betrifft das Bezugszeichen 1 das Gehäuse einer Gerätschaft, z.B. einer Pumpe oder eines Rührwerkes, mit einer Durchtrittsbohrung für eine Welle 3, die mittels der erfindungsgemässen Dichtungsanordnung gegenüber der Bohrung abgedichtet ist. Das Bezugszeichen 2 betrifft eine Montagebrille zur Befestigung der Dichtungsanordnung am Gehäuse 1.

Die Dichtungsanordnung umfasst ein Paar axial beabstandete Primärdichtungen 4, 5, die einen in geeigneter Weise gegenüber der Umgebung abgedichteten Sperrgasraum 6 axial begrenzen, in den über eine Zuführbohrung 7 ein geeignetes Sperrdruckgas, insbesondere ein in Bezug auf das Produkt inertes Gas, wie Stickstoff, eingeführt werden kann. Das Sperrdruckgas wird im Sperrgasraum 6 unter einem Druck gehalten, der um ein geeignetes Ausmass, z.B. 10 % höher als der Produktdruck sein sollte.

Obschon beide Primärdichtungen 4, 5 bei der vorliegenden Ausführungsform als Gleitringdichtungen ausgebildet sind, ist die Erfindung hierauf nicht beschränkt. Wenn erwünscht, könnte eine der Primärdichtungen, nämlich die Primärdichtung 5, die den Sperrgasraum 6 gegenüber der Aussenumgebung abdichtet, auch in anderer Weise, z.B. als Labyrinth- oder Stopfbüchsendichtung, ausgebildet sein.

Im Folgenden wird auf die dem Produkt in einem Produktbereich 11 der Gerätschaft zugewandte Primärdichtung 4 näher Bezug genommen, die als Gleitringdichtung ausgebildet ist. Die Gleitringdichtung 4 umfasst ein Paar zusammenwirkende Gleitringe 8, 9, deren einander zugewandten Dichtflächen zwischen sich bei Betrieb einen Dichtspalt 10 definieren, um den Sperrgasraum 6 gegenüber dem Produktraum 11 abzudichten. Das Sperrdruckgas steht innenumfänglich des Dichtspaltes 10 an, während der Dichtspalt aussenumfänglich mit dem Produktraum 11 in Verbindung steht.

Der Gleitring 8 ist in bekannter Weise auf einer auf der Welle 3 aufgesetzten Buchse 16 zur gemeinsamen Drehung damit bzw. der Welle 3 montiert. Der Gleitring 8 ist ferner mittels in Nuten gehaltener Sekundärdichtungselemente (nicht näher bezeichnet) gegenüber der Buchse 16 abgedichtet. Dadurch wird ein Mediumaustausch zwischen dem Sperrgasraum 6 und dem Produktraum 11 längs des rotierenden Gleitringes 8 verhindert.

Der Gleitring 9 ist drehfest, jedoch axial beweglich an der Montagebrille 2 gehalten, so dass er in Richtung auf und weg vom rotierenden Gleitring 8 eine begrenzte Axialbewegung vornehmen kann. Eine Vorspanneinrichtung 13, z.B. in Gestalt ein oder mehrerer umfänglich verteilt angeordneter Vorspannfedern, die sich mit einem axialen Ende an der Montagebrille 2 und mit ihren anderen axialen Enden am Gleitring 9 abstützen, ist vorgesehen, um den Gleitring 9 mit einer axialen Vorspannkraft zu beaufschlagen, so dass die zusammenwirkenden Dichtflächen der Gleitringe 8, 9 in einer dichtenden Beziehung miteinander während solcher Betriebszeiten, z.B. bei Stillstand der Welle 3, gehalten werden, bei denen kein oder kein ausreichender Dichtspalt 10 zwischen den Gleitringen 8, 9 gebildet ist.

Zur Abdichtung des drehfesten Gleitringes 9 gegenüber der Montagebrille 2 ist ein Sekundärdichtungselement 12 vorgesehen, das vorzugsweise in Gestalt eines O-Ringes ausgebildet ist. An der Montagebrille 2 und dem drehfesten Gleitring 9 sind axial beabstandete Anschlagschultern vorgesehen, mit denen das Sekundärdichtungselement 12 bei einer axialen Bewegung des drehfesten Gleitringes 9 in die eine oder andere axiale Richtung in Anlage kommen kann, wobei der axiale Abstand der Anschlagschultern von der jeweiligen relativen axialen Stellung des drehfesten Gleitringes 9 in Bezug auf die Montagebrille 2 abhängt.

Das Sekundärdichtungselement könnte auch in einer Nut in entweder dem drehfesten, axialbeweglichen Gleitring oder der Montagebrille aufgenommen sein und mit einer gegenüberliegenden Fläche des jeweiligen anderen Teils in dichtender Beziehung stehen, wobei zwischen der betreffenden Fläche und dem Sekundärdichtungselement eine Relativbewegung erfolgen kann.

Das Sekundärdichtungselement 12 steht an seinen inneren und äusseren Umfängen mit benachbarten Umfangsbereichen des drehfesten Gleitringes 9 und der Montagebrille 2 in dichtender Beziehung. Vorzugsweise steht von der Montagebrille 2 ein axialer Flanschbereich 15 über eine Wegstrecke axial ab, die etwas grösser als die Wegstrecke ist, innerhalb der sich das Sekundärdichtungselement 12 bewegen kann. Der Flanschbereich 15 überdeckt einen zwischen den Anschlagschultern definierten Raum 14, in dem das Sekundärdichtungselement 12 aufgenommen ist und schafft eine innere Umfangsfläche, längs der das Sekundärdichtungselement 12 bei seiner axialen Bewegung in dichtender Anlage bleibt.

Erfindungsgemäss ist ein Abschirmelement oder eine Abschirmhülse 18 vorgesehen, die einen axialen Bereich der Gleitringdichtung 4 aussenumfänglich mit radialem Abstand umgibt und zur gemeinsamen Drehung mit der Welle 3 bzw. der Buchse 16 montiert ist. Die Abschirmhülse 18 kann zu diesem Zweck einen radialen Montagebereich 19 aufweisen, der entweder unmittelbar in geeigneter Weise mit der Welle 3 drehfest verbunden oder mit der Buchse 16, wie bei 20 angedeutet ist, verschraubt sein kann. Die Abschirmhülse 18 übergreift den rotierenden Gleitring 8 so, dass durch die Abschirmhülse 18 eine vorzugsweise selbstausrichtende Montage des Gleitringes 8 in Bezug auf die Buchse 16 nicht beeinträchtigt wird.

Die Abschirmhülse 18 überspannt einen axialen Abschnitt der Gleitringdichtung 4, der wenigstens den Dichtspalt 10, einen Bereich des drehfesten Gleitringes 9 und den Flanschbereich 15 einschliesst. Zwischen diesen Bereichen ist ein Spaltraum 21 gebildet, der an einem axialen Ende, wie dies bei 22 angedeutet ist, geschlossen und an seinem anderen axialen Ende 23 gegenüber dem Produktraum 11 offen ist.

Würde, das abzudichtende Produkt in den Spaltraum 21 und damit in den Bereich des beweglichen Sekundärdichtungselementes 12 eindringen, könnte das Produkt den vom Sekundärdichtungselement 12 eingenommenen Raum 21 ausfüllen, was die axiale Beweglichkeit des Sekundärdichtungselementes 12 beeinträchtigen würde. Auch könnten sich an den Umfangsflächenbereichen des Gleitringes 9 und der Montagebrille 2, mit denen das Sekundärdichtungselement 12 in dichtendem Eingriff steht, Ablagerungen aus Feststoffen absetzen, die in dem abzudichtenden Produkt enthalten sein können. Solche Ablagerungen würden die axiale Beweglichkeit des Sekundärdichtungselementes 12 und damit des damit zusammenwirkenden Gleitringes 9 ebenfalls beeinträchtigen oder ggf. sogar ganz verhindern.

Um eine derartige Folge aus einer Kontaktnahme zwischen dem Sekundärdichtungselement 12 und dem Produkt zu vermeiden, ist der Spaltraum 21 in seinen radialen und axialen Abmessungen so bemessen, dass eine Leckage an Sperrdruckgas aus dem Dichtungspalt 10 im Spaltraum 21 aufgefangen und darin wenigstens vorübergehend zurückgehalten wird, so dass das Sperrdruckgas nicht ungehindert in den Produktbereich 11 strömen kann, wie es der Fall sein würde, wenn die Abschirmhülse 18 nicht vorgesehen wäre. Infolge des sich im Spaltraum 21 ansammelnden Sperrdruckgases wird die Umgebung des axial beweglichen Sekundärdichtungselementes 12 gegenüber dem Produktraum 11 quasi abgedichtet und dadurch ein ungehinderter Zutritt des Produktes zum Sekundärdichtungselement 12 wirksam verhindert.

Der Spaltraum 21 hat wenigstens nahe seinem in den Produktraum 11 ausmündenden axialen Ende 22 eine verringerte Spaltweite, die einen Drosseleffekt ausübt und ein ungehindertes Eindringen des Produktes in den Spaltraum 21 verhindert. Die in den Spaltraum 21 eingeführte Leckage an Sperrdruckgas kann deshalb darin ein stabiles oder sich durch nachströmende Leckage an Sperrdruckgas ständig auffüllendes abdichtendes Gaspolster bilden. Es wurde festgestellt, dass die gewünschte Drosselwirkung erreicht wird, wenn die Spaltweite zwischen etwa 0,5 und 1,5 mm, vorzugsweise etwa 1,0 mm, beträgt.

Es könnte anstelle des drehfesten Gleitringes 9 auch der rotierende Gleitring 8 axial beweglich auf der Buchse 16 angeordnet und mit einer Federvorspannkraft beaufschlagt sein, während der Gleitring 9 axial unbeweglich gehalten sein könnte. Bei dieser Modifikation würde das axial bewegliche Sekundärdichtungselement 12 zwischen dem rotierenden Gleitring 8 und der Buchse 16 vorzusehen sein.

Zur Förderung der Dichtspaltbildung beim Betrieb der Dichtungsanordnung wird bevorzugt, dass förderwirksame Strukturen oder Ausnehmungen in wenigstens einer der Dichtflächen der zusammenwirkenden Gleitringe vorgesehen sind. Dadurch wird das Sperrdruckgas zwischen die Dichtflächen und in Richtung auf den Spaltraum 21 gepumpt. Derartige förderwirksame Strukturen oder Ausnehmungen sind dem Fachmann bekannt und brauchen hier nicht näher erläutert zu werden. Es kann z.B. auf BURGMANN, Gasgeschmierte Gleitringdichtungen, a.a.O., Seite 16 verwiesen werden.

## Patentansprüche

1. Doppeltwirkende Dichtungsanordnung mit einem Paar Primärdichtungen (4,5), die zwischen sich einen mit einem Sperrdruckgas beaufschlagbaren Sperrgasraum (6) begrenzen, von denen wenigstens die einem abzudichtenden Medium zugewandte Primärdichtung eine Gleitringdichtung mit einem Paar zusammenwirkender Gleitringe (8,9) ist, die zwischen sich bei Betrieb einen Dichtspalt (10) schaffen, um den Sperrgasraum gegenüber einem mit dem Medium beaufschlagbaren Bereich (11) aussenumfänglich des Dichtspaltes abzudichten, wobei einer der Gleitringe zur gemeinsamen Drehung mit einem rotierenden Bauteil vorgesehen und der andere drehfest an einem stationären Bauteil montiert ist und einer der Gleitringe axial beweglich angeordnet und gegen den anderen Gleitring federvorgespannt ist, mit einem zwischen dem axial beweglichen Gleitring und dem betreffenden Bauteil angeordneten Sekundärdichtungselement (12), um den axial beweglichen Gleitring gegenüber dem betreffenden Bauteil abzudichten, und mit einem hülsenförmigen Abschirmelement (18), das wenigstens einen Bereich der Gleitringdichtung (4), der den Dichtspalt (10) und das Sekundärdichtungselement (12) umfasst, mit geringem radialem Abstand aussenumfänglich umgibt, so dass längs des Bereiches ein zum abzudichtenden Medium offener Spaltraum (21) aussenumfänglich der Gleitringdichtung gebildet ist, in dem eine Leckage an Sperrdruckgas aus dem Dichtspalt aufnehmbar ist, **dadurch gekennzeichnet, dass** zur Bildung eines Sperrgaspolsters aus der Leckage im Spaltraum (21) dieser wenigstens nahe seinem zum abzudichtenden Medium offenen Ende (23) eine Spaltweite mit Drosselwirkung in Bezug auf das abzudichtende Medium hat, wobei das Abschirmelement (18) zur gemeinsamen Drehung mit dem rotierenden Gleitring (8) montiert ist.

2. Dichtungsanordnung nach Anspruch 1, **dadurch gekennzeichnet, dass** die Spaltweite des Spaltraumes (21) zwischen 0,5 und 1,5 mm, vorzugsweise etwa 1,0 mm beträgt.

3. Dichtungsanordnung nach Anspruch 1oder 2, **dadurch gekennzeichnet, dass** der axial bewegliche Gleitring der drehfeste, am stationären Bauteil gehaltene Gleitring (9) ist.

4. Dichtungsanordnung nach einem der vorhergehenden Ansprüche, **dadurch gekennzeichnet, dass** förderwirksame Strukturen oder Ausnehmungen in wenigstens einer der Dichtflächen der zusammenwirkenden Gleitringe (8,9) vorgesehen sind.

## Claims

1. A double acting seal device comprising a pair of primary seals (4, 5) delimiting between each other a buffer gas chamber (6) adapted to be exposed to a pressurised buffer gas, at least the primary seal facing the medium to be sealed is a mechanical face seal having a pair of cooperating seal rings (8, 9) which create a seal gap (10) therebetween during operation for sealing the buffer gas chamber with respect to a region (11) provided peripherally outwardly of the seal gap which can be exposed to the medium, one of said seal rings is provided for rotation in common with a rotary component and the other is mounted in non-rotatable manner on a stationary component, and one of said seal rings is arranged to be axially moveable and spring biased against the other seal ring, a secondary seal element (12) arranged between the axially moveable seal ring and the component concerned for sealing the axially moveable seal ring with respect to the component concerned, and a sleeve-shaped shielding element (18) surrounding at least a portion of the mechanical face seal (4) including the seal gap (10) and the secondary seal element (12) at a small radial distance peripherally outward thereof thereby a gap chamber (21) is formed which is open to the medium requiring sealing along said portion peripherally outward of the mechanical face seal, thereby a leakage of pressurised buffer gas from the seal gap can accumulate in said chamber, **characterized in that**, for forming a buffer gas cushion in the gap chamber (21) from the leakage, the gap width of said chamber at least close to the end (23) thereof which is open to the medium requiring sealing is such as to produce a throttle effect with respect to the medium requiring sealing, said shielding element (18) being mounted for rotation in common with the rotary seal ring (8).

2. The seal device according to claim 1, **characterized in that** the gap width of the gap chamber (21) is between 0.5 and 1.5 mm, preferably about 1.0 mm.

3. The seal device according to claim 1 or 2, **characterized in that** the axially moveable seal ring is the non-rotatable seal ring (9) mounted on the stationary component.

4. The seal device according to any of the preceding claims, **characterized in that** pumping structures or grooves are provided in at least one of the seal faces of the cooperating seal rings (8, 9).

## Revendications

1. Système d'étanchéité à double effet comprenant une paire de garnitures d'étanchéité primaires (4, 5) qui délimitent entre elles une chambre de gaz d'arrêt (6) pouvant être sollicitée par un gaz d'arrêt sous pression, dont au moins la garniture d'étanchéité primaire située du côté d'un fluide à contenir est une garniture d'étanchéité à anneaux glissants comprenant une paire d'anneaux glissants (8, 9) coopérant entre eux qui, lorsqu'ils sont en action, forment entre eux une fente d'étanchéité (10) afin d'étancher la chambre de gaz d'arrêt au niveau du pourtour extérieur de la fente d'étanchéité vis à vis d'une zone (11) pouvant être sollicitée par le fluide, l'un des anneaux glissants étant destiné à être solidaire en rotation d'une pièce rotative et l'autre étant monté de façon à ne pas pouvoir tourner dans une pièce fixe, et l'un des anneaux glissants étant disposé de façon à être mobile axialement et sollicité et précontraint par ressort contre l'autre anneau glissant, comprenant en outre un élément d'étanchéité secondaire (12) placé entre l'anneau glissant mobile axialement et la pièce correspondante, qui est destiné à étancher l'anneau glissant mobile axialement vis à vis de la pièce correspondante, ainsi qu'un élément de protection (18) en forme de douille qui entoure à faible distance radiale au moins le pourtour extérieur d'une zone de la garniture d'étanchéité à anneaux glissants (4) comprenant la fente d'étanchéité (10) et la garniture d'étanchéité secondaire (12), si bien qu'il se forme sur le pourtour extérieur de la garniture d'étanchéité à anneaux glissants, le long de ladite zone, un espace en forme de fente (21) ouvert sur le fluide à contenir, dans lequel une fuite de gaz d'arrêt sous pression provenant de la fente d'étanchéité peut être contenue, **caractérisé en ce que**, pour former un tampon de gaz d'arrêt à partir de la fuite dans l'espace en forme de fente (21), ce dernier présente au moins à proximité de son extrémité (23) ouverte sur le fluide à contenir une largeur de fente avec effet d'étranglement par rapport au fluide à contenir, l'élément de protection (18) étant monté de manière à être solidaire en rotation de l'anneau glissant rotatif (8).

2. Système d'étanchéité selon la revendication 1, **caractérisé en ce que** la largeur de l'espace en forme de fente (21) est comprise entre 0,5 et 1,5 mm et s'élève de préférence à 1,0 mm environ.

3. Système d'étanchéité selon la revendication 1 ou 2, **caractérisé en ce que** l'anneau glissant mobile axialement est l'anneau glissant (9) fixe en rotation monté sur la pièce fixe.

4. Système d'étanchéité selon l'une des revendications précédentes, **caractérisé en ce que** sont prévu(e)s des structures ou des évidements favorisant la formation de la fente d'étanchéité dans au moins l'une des surfaces d'étanchéité des anneaux glissants (8, 9) coopérant entre eux.
